# EUROPÄISCHE PATENTSCHRIFT

(11) **EP 1 059 023 B1**
(45) Veröffentlichungstag und Bekanntmachung des Hinweises auf die Patenterteilung: **04.08.2004**
(21) Anmeldenummer: 00111362.0
(22) Anmeldetag: 26.05.2000
(51) Int. Cl.: A01F 12/26

(54) **Mähdrescher**
Combine harvester
Moissonneuse-batteuse

(30) Priorität: 10.06.1999 DE 19926365
(43) Veröffentlichungstag der Anmeldung: 13.12.2000
(73) Patentinhaber: CLAAS Selbstfahrende Erntemaschinen GmbH, 33428 Harsewinkel (DE)
(72) Erfinder: Dammann, Martin, 33428 Harsewinkel (DE); Heidjann, Franz, 33428 Harsewinkel (DE)

(56) Entgegenhaltungen:
- EP-A- 0 516 889
- DE-A- 3 832 996
- DE-A- 3 914 962
- GB-A- 1 247 630
- US-A- 3 209 759

## Beschreibung

Die Erfindung betrifft einen Mähdrescher mit einem, eine Revisionsöffnung aufweisenden Dreschwerkgehäuse, einem das Dreschgut fördernden Schrägförderer, einem quer zur Fahrtrichtung eingebauten Dreschwerk, bestehend aus einer Dreschtrommel und einem Dreschkorb, der mit einem Siebbelag ausgerüstet ist, der aus mehreren, längs aneinanderstoßenden Belagabschnitten besteht.

Bei dem in Rede stehenden Mähdrescher ist die Breite des das Dreschgut antransportierenden Schrägförderers kleiner als die Breite der Dreschtrommel und des Dreschkorbes. Zur einwandfreien Übergabe des von dem Schrägförderer antransportierten Dreschgutes an die Dreschtrommel ragt der Schrägförderer in das Dreschgehäuse hinein. Die Revisionsöffnung ist mittels einer abnehmbaren Klappe verschlossen und liegt oberhalb des auslaufseitigen Endes des Schrägförderers. Sie dient dazu, um beispielsweise für Wartungsarbeiten den Siebbelag des Dreschkorbes auf dem Dreschwerkgehäuse herauszunehmen. Dazu ist es bekannt, ( EP 0396 968 ) daß der Dreschkorb längsgeteilt ist, so daß einzelne Siebbelagabschnitte gebildet werden, die nacheinander aus dem Dreschwerkgehäuse herausgenommen werden können. Der Dreschkorb als ganzes ist um eine horizontale Achse schwenkbar aufgehängt, und kann mittels eines Gestänges von der Betriebsstellung in eine Außerbetriebstellung abgesenkt werden und in umgekehrter Weise wieder in die Betriebsstellung geschwenkt werden.

Um die Leistung eines Mähdreschers zu erhöhen, ist es notwendig, den Durchmesser der Dreschtrommel gegenüber den bislang bekannten Ausführungen zu erhöhen. Daraus folgt, daß der die Trommel um einen bestimmten Winkel umgebende Dreschkorb in Umfangsrichtung der Dreschtrommel länger wird. Es ist dann nicht mehr möglich, die einzelnen Siebbelagsabschnitte nacheinander auf dem eng begrenzten Bauraum des Dreschwerkgehäuses durch die Revisionsöffnung hindurch zu entnehmen.

Der Erfindung liegt die Aufgabe zugrunde, eine Lösung vorzuschlagen, daß bei einem Mähdrescher der eingangs näher beschriebenen Art mit einer gegenüber den bisherigen Ausführungen im Durchmesser vergrößerten Dreschtrommel zumindest eine Entnahme der Siebbelagabschnitte bei Beibehaltung der begrenzten Einbauräume möglich ist.

Zur Lösung der gestellten Aufgabe wird Siebbelag entsprechend dem Anspruch 1 vorgeschlagen, bei dem der aus mehreren Siebbelagabschnitten gebildete Siebbelag zur Angleichung an den Durchmesser der Dreschtrommel einen die Umschlingung der Dreschtrommel durch den Siebbelag vergrößerndes Siebsegment aufweist, welches mit den Siebbelagabschnitten spaltfrei verbunden ist.

Es ist nunmehr möglich, daß nach Lösen der Verbindung zwischen den Siebbelagabschnitten und dem Siebsegment bzw. nach Lösen der Verbindungen die Siebbelagsabschnitte aus dem Dreschwerkgehäuse herausgenommen werden können, obwohl die in Umfangsrichtung sich erstreckende Länge des gesamten Siebbelages trotz Beibehaltung des Umschlingungswinkels vergrößert ist.

Beim Betrieb des Mähdreschers müssen die einander zugeordneten Querränder der Siebbelagabschnitte und der Querrand des Siebsegmentes fest miteinander verbunden sein. Um beispielsweise zwecks Wartungsarbeiten die Verbindungen in einfachster Weise lösen zu können, ist gemäß einem ersten Vorschlag vorgesehen, daß die Querränder der Siebbelagabschnitte und der Querrand des Siebsegmentes formschlüssig jedoch lösbar miteinander verbunden sind. Die formschlüssige Verbindung sollte so ausgelegt sein, daß keine mechanischen Verbindungselemente notwendig sind, und daß zum Lösen der Verbindung keine speziellen Werkzeuge notwendig sind. Die formschlüssige Verbindung könnte beispielsweise so ausgelegt sein, daß ein Querrand U-förmig und der andere Querrand winkelförmig und in den U-förmigen Querrand eingreifend ausgebildet ist. Eine solche Gestaltung ist bevorzugt dann anzuwenden, wenn die Siebbelagabschnitte aus dem Dreschwerkgehäuse herausgenommen werden sollen, das Siebsegment jedoch darin verbleiben kann. Die Trennung wäre dann beispielsweise möglich, wenn der gesamte Dreschkorb abgesenkt wird und durch Anheben des jeweiligen Siebbelagabschnittes die Verbindung außer Eingriff kommt.

Bei einer alternativen Ausführung entsprechend Anspruch 2, bei der auch das Siebsegment aus dem Dreschwerkgehäuse herausgenommen werden soll, ist vorgesehen, daß das Siebsegment aus einer der Anzahl der Siebbelagabschnitte entsprechenden Stückzahl von Teilsegmenten mit gleicher Breite wie die Siebbelagabschnitte gebildet ist und das die Siebbelagabschnitte und die Teilsegmente drehbeweglich, jedoch fest miteinander verbunden sind. Beim Herausnehmen der Siebbelagabschnitte wird dann das anhängende Teilsegment mitgezogen. Da deren Stellung zueinander durch die drehbewegliche Kopplung verändert werden kann, kann jeder Siebsegmentabschnitt mit dem anhängenden Teilsegment durch die Revisionsöffnung herausgenommen werden. Im Normalfall liegt das zusätzliche Siebsegment, in Durchflußrichtung des Dreschgutes gesehen, hinter den Siebbelagabschnitten. Sofern jedoch die drehbewegliche Verbindung beispielsweise durch Scharniere gewährt wird, ist es möglich, daß die Teilsegmente des Siebsegmentes in Flußrichtung des Erntegutes gesehen, auch vor den Siebbelagabschnitten angeordnet sind.

Anhand der beiliegenden Zeichnungen wird die Erfindung noch näher erläutert.

Es zeigen:
- Figur 1: Das Dreschwerk des erfindungsgemäßen Mähdreschers und des Auslaufseitigen Endes des Schrägförderers im Vertikalschnitt;
- Figur 2: eine der Figur 1 entsprechende Darstellung, jedoch mit abgesenktem Dreschkorb und die Entnahme eines Siebbelagabschnittes in verschiedenen Stellungen zeigend;
- Figur 3: den Dreschkorb des erfindungsgemäßen Mähdreschers in einer ersten Ausführung;
- Figur 4: eine weitere Ausführung des Dreschkorbes des erfindungsgemäßen . Mähdreschers;
- Figur 5: einen Schnitt längs der Linie V-V in der Figur 4 und
- Figur 6: einen Schnitt längs der Linie VI-VI in der Figur 3.

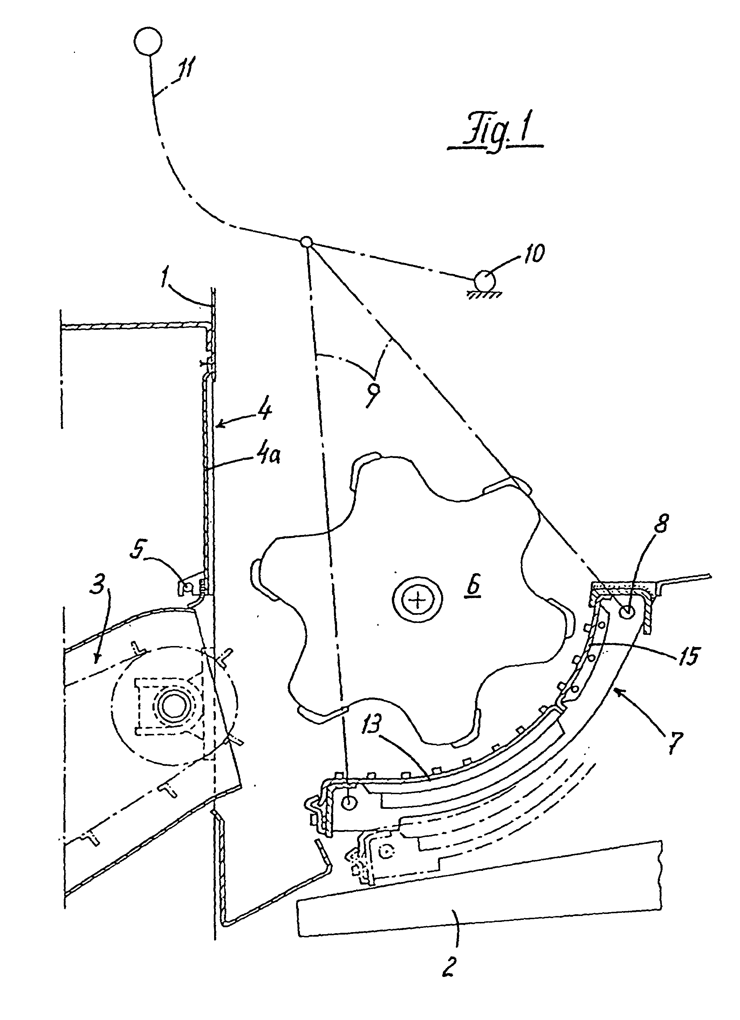

In den Figuren 1 und 2 zeigt bei einem Mähdrescher die Frontwand 1 des nicht dargestellten Dreschwerkgehäuses, einen Teil der Reinigungsvorrichtung 2, den durch die Frontwand 1 einmündenden Schrägförderer 3 und eine über diesem angeordnete Revisionsöffnung 4 mit einer Verschließklappe 4a . Diese ist unten in zwei seitliche Stehzapfen 5 eingehängt. Im Dreschwerkgehäuse befindet sich die Dreschtrommel 6, deren Achse quer zur Fahrrichtung verläuft. Etwa über den unteren rechten Teil des Trommelumfangs erstreckt sich ein gewölbter Dreschkorb 7, der um in seinem hinteren Randbereich angeordnete, zur Trommelachse parallele Zapfen 8 schwenkbar gelagert ist. Im vorderen Bereich ist er an zwei Lenkerstäbe 9 aufgehängt, die mit den anderen Enden an einem in einem Lager 10 gelagerten Betätigungshebel 11 angelenkt sind.

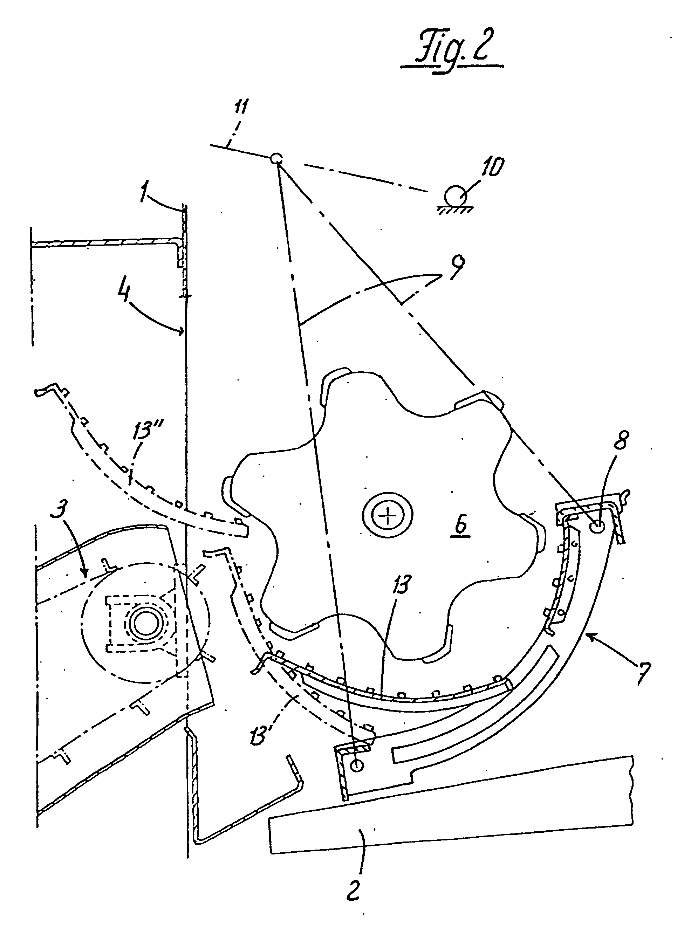

In den Figuren 3 und 4 ist der Siebbelag des Dreschkorbes 7 in zwei verschiedenen Ausführungen dargestellt. Danach besteht der Siebbelag im dargestellten Ausfuhrungsbeispiel aus drei Siebbelagabschnitten 12, 13 und 14, die in Achsrichtung der Dreschtrommel 6 aneinandergereiht sind. Um einen ausreichenden Umschlingungswinkel für die Dreschtrommel 6 zu erzielen ist, im dargestellten Ausführungsbeispiel ein Siebsegment 15 mit den Siebbelagabschnitten 12, 13, 14 fest verbunden. Die Breite des Siebsegmentes stimmt mit der Gesamtbreite des Dreschkorbes 7 überein. Insbesondere aus den Figuren 1 und 2 ergibt sich, daß durch das Siebsegment 15 die Dreschtrommel 6 um einen ausreichend großen Winkel umschlungen wird. Im dargestellten Ausführungsbeispiel gemäß der Figur 4 besteht das Siebsegment 15 aus drei Einzelsegmenten 15a, 15b, 15c. Jedes Einzelsegment 15a, 15b, 15c ist durch zwei Scharniere 16 gelenkig mit dem zugehörigen Siebbelagabschnitt 12, 13, 14 gelenkig verbunden. Bei dem Ausfuhrungsbeispiel gemäß der Figur 3 ist das Siebsegment 15 einstückig ausgebildet.

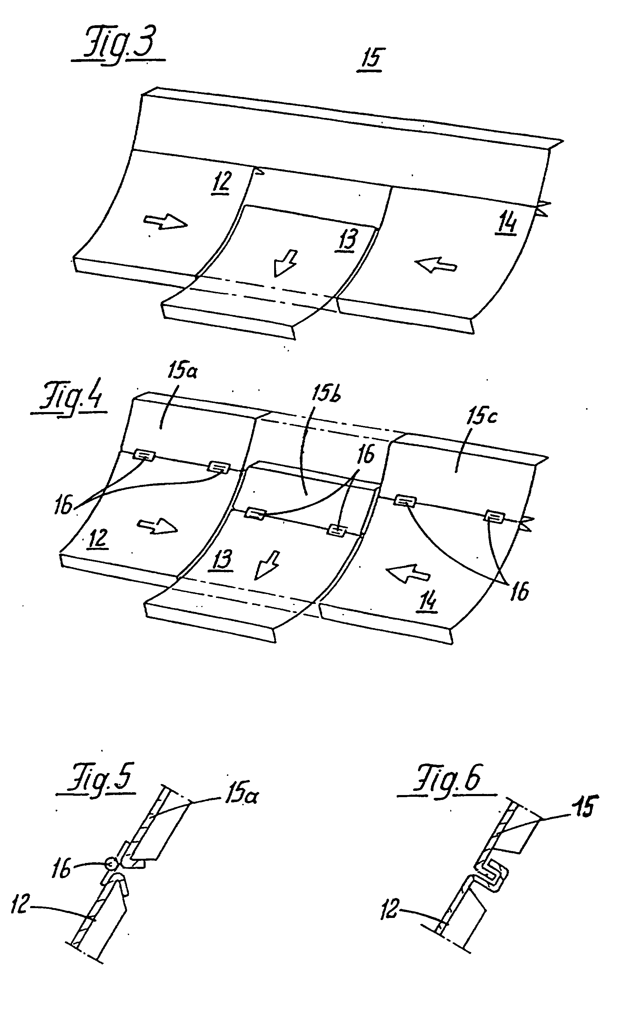

Das Siebsegment 15 ist den Siebbelagsabschnitten 12, 13, 14 formschlüssig verbunden, wie die Figur 6 zeigt. Dadurch besteht die Möglichkeit, daß die Verbindung ohne mechanische Verbindungselemente hergestellt werden kann und daß zur Entnahme der Siebbelagabschnitte 12, 13, 14 keine Werkzeuge notwendig sind. Der Formschluß wird im gezeigten Ausführungsbeispiel erreicht, in dem die dem Siebsegment 15 zugeordneten Kanten der Siebbelagabschnitte 12, 13, 14 U-förmig gestaltet und zur Dreschtrommel 6 hin offen sind. Die zugeordnete Kante des Siebsegmentes 15 ist winkelförmig ausgebildet, so daß sie in den U-förmigen Bereich jedes Siebbelagabschnittes 12, 13, 14 hineinragt.

Zum Ausbau der Siebbelagabschnitte, 12, 13, 14 wird zunächst die Verschließklappe 4a abgenommen. Danach wird mittels des Betätigungshebels 11 der Dreschkorb in die untere Stellung geschwenkt, wie in der Figur 1 in strich-punktierten Linien angedeutet und in der Figur 2 in Vollinien gezeichnet ist. Danach wird zunächst der mittlere Siebbelagabschnitt 13 angehoben und anschließend nach vorn gezogen, wie in der Figur 2 dargestellt. Die Zwischenstellungen dieses Siebbelagabschnittes 13 sind durch die Bezugsziffern 13' und 13" dargestellt. Die beiden seitlichen Siebbelagabschnitte 12, 14 werden in der gleichen Weise ausgebaut, müssen jedoch zunächst in Mitte geschoben werden, wie durch die Pfeile angedeutet ist. Bei einer Ausführung entsprechend der Figur 4 werden die Einzelsegmente 15 a, 15b, 15c gleichzeitig mit den zugehörigen Siebbelagabschnitten 12, 13, 14 herausgenommen, da das durch die gelenkige Verbindung möglich ist, daß sie gegeneinander verschwenkt werden. Bei der Ausführung nach der Figur 3 verbleibt bei der Entnahme der Siebbelagabschnitte 12, 13, 14 das Siebsegment 15 in der eingebauten Stellung. Die Trennung erfolgt, indem zunächst der jeweilige Siebbelagabschnitt 12, 13, 14 angehoben wird und die Verbindung außer Eingriff gerät. Das Einbauen der Siebbelagabschnitte 12, 13, 14 erfolgt in der umgekehrten Reihenfolge.

Die Erfindung ist nicht auf die dargestellten Ausführungsbeispiele beschränkt. Wesentlich ist, daß der Dreschkorb 7 aus mindestens zwei Siebbelagabschnitten 12, 13 besteht, und daß zur Vergrößerung der Siebfläche das Siebsegment 15 mit den Siebbelagabschnitten verbunden ist. Bei der Ausführung nach der Figur 4 ist es nicht notwendig, daß das Siebsegment 15 in Flußrichtung des Dreschgutes gesehen, hinter den Siebbelagabschnitten 12, 13, 14 angeordnet ist, sondern es könnte auch davor liegen.

### Bezugszeichenliste

- 1 -: Frontwand
- 2 -: Reinigungsvorrichtung
- 3 -: Schrägförderer
- 4 -: Revisionsöffnung
- 4a: Verschließklappe
- 5 -: Stehzapfen
- 6 -: Dreschtrommel
- 7 -: Dreschkorb
- 8 -: Zapfen
- 9 -: Lenkerstab
- 10 -: Lager
- 11 -: Betätigungshebel
- 12 -: Siebbelagabschnitt
- 13 -: Siebbelagabschnitt
- 13': " "
- 13": " "
- 14 -: Siebbelagabschnitt
- 15 -: Siebsegment
- 15a -: Einzelsegment
- 15b -: Einzelsegment
- 15c -: Einzelsegment
- 16 -: Scharnier

## Patentansprüche

1. Mähdrescher mit einem, eine Revisionsöffnung aufweisenden Dreschwerkgehäuse, einem das Dreschgut fördernden Schrägförderer, einem quer zur Fahrrichtung eingebauten Dreschwerk, bestehend aus einer Dreschtrommel und einem Dreschkorb, der mit einem Siebbelag ausgerüstet ist, der aus mehreren, quer zur Gutflußrichtung aneinanderstoßenden Siebbelagsabschnitten besteht,
**dadurch gekennzeichnet,**
**daß** der Siebbelag einen die Umschlingung der Dreschtrommel (6) durch den Siebbelag vergrößerndes, die Breite der aneinanderstoßenden Siebabschnitte überdeckendes Siebsegment (15) aufweist, welches mit den mehreren Siebbelagsabschnitten (12, 13, 14), lösbar verbunden ist.

2. Mähdrescher mit einem, eine Revisionsöffnung aufweisenden Dreschwerkgehäuse, einem das Dreschgut fördernden Schrägförderer, einem quer zur Fahrtrichtung eingebauten Dreschwerk, bestehend aus einer Dreschtrommel und einem Dreschkorb, der mit einem Siebbelag ausgerüstet ist, der aus mehreren, quer zur Gutflußrichtung aneinanderstoßenden Siebelagsabschnitten besteht,
**dadurch gekennzeichnet:**
**daß** jeder der Siebelagsabschnitte (12,13,14,) über eine gelenkige Verbindung mit einem gleichbreiten Siebsegment (15a, b c) verlängert ist.

3. Mähdrescher nach Anspruch 2,
**dadurch gekennzeichnet,**
**daß** das Siebsegment (15) aus einer der Anzahl der Siebbelagsabschnitte (12, 13, 14) entsprechenden Stückzahl von Einzelsegmenten (15a, 15b, 15c) gebildet ist, und die Einzelsegmente (15a, 15b, 15c) drehbeweglich, jedoch fest, vorzugsweise durch Scharniere (16), mit den Siebbelagabschnitten (12, 13, 14) verbunden sind.

4. Mähdrescher nach den Ansprüchen 2 und 3,
**dadurch gekennzeichnet,**
**daß** die zugeordneten Querränder der Siebbelagsabschnitte (12, 13, 14) und des Siebsegmentes (15;15a,b,c,) formschlüssig, jedoch lösbar miteinander verbunden sind.

5. Mähdrescher nach den Ansprüchen 2 bis 4,
**dadurch gekennzeichnet,**
**daß** ein Querrand U-förmig und der andere Querrand winkelförmig und in den U-förmigen Rand eingreifend ausgebildet ist.

6. Mähdrescher nach den Ansprüchen 2 bis 5
**dadurch gekennzeichnet,**
**daß** die Ränder der Siebbelagsabschnitte (12, 13, 14) U-förmig gestaltet, und die zugeordneten Ränder der Siebsegmente (15a, b, c) winkelförmig gestaltet sind.

7. Mähdrescher nach einem oder mehreren der vorhergehenden Ansprüche 1 bis 6,
**dadurch gekennzeichnet,**
**daß** das bzw. die Siebsegment / e (15), (15a, b, c) in Flußrichtung des Dreschgutes gesehen, direkt hinter den Siebbelagsabschnitten (12, 13, 14) angeordnet ist bzw. sind.

## Claims

1. A combine harvester comprising a threshing mechanism housing having an inspection opening, an elevator for conveying the threshing material, a threshing mechanism installed transversely with respect to the direction of travel, comprising a threshing drum and a threshing concave which is equipped with a sieve lining comprising a plurality of sieve lining portions which are in mutually butting relationship transversely with respect to the direction of flow of the material, **characterised in that** the sieve lining has a sieve segment (15) which increases the extent to which the sieve lining passes around the threshing drum (6) and which covers the width of the mutually butting sieve portions and which is releasably connected to the plurality of sieve lining portions (12, 13, 14).

2. A combine harvester comprising a threshing mechanism housing having an inspection opening, an elevator for conveying the threshing material, a threshing mechanism installed transversely with respect to the direction of travel, comprising a threshing drum and a threshing concave which is equipped with a sieve lining comprising a plurality of sieve lining portions which are in mutually butting relationship transversely with respect to the direction of flow of the material, **characterised in that** each of the sieve lining portions (12, 13, 14) is prolonged by way of a hinged connection to a sieve segment (15a, b, c) of equal width.

3. A combine harvester according to claim 2 **characterised in that** the sieve segment (15) is formed from a number of individual segments (15a, 15b, 15c) corresponding to the number of sieve lining portions (12, 13, 14) and the individual segments (15a, 15b, 15c) are connected rotatably but fixedly preferably by hinges (16), to the sieve lining portions (12, 13, 14).

4. A combine harvester according to claims 2 and 3 **characterised in that** the associated transverse edges of the sieve lining portions (12, 13, 14) and of the sieve segment (15; 15a, b, c) are connected in positively locking relationship but releasably to each other.

5. A combine harvester according to claims 2 to 4 **characterised in that** one transverse edge is of a U-shape and the other transverse edge is of an angled configuration and is adapted to engage into the U-shaped edge.

6. A combine harvester according to claims 2 to 5 **characterised in that** the edges of the sieve lining portions (12, 13, 14) are of a U-shaped configuration and the associated edges of the sieve segments (15a, b, c) are of an angular configuration.

7. A combine harvester according to one or more of preceding claims 1 to 6 **characterised in that** the sieve segment or segments (15), (15a, b, c), as viewed in the direction of flow of the threshing material, is or are arranged directly downstream of the sieve lining portions (12, 13, 14).

## Revendications

1. Moissonneuse-batteuse comprenant un carter de mécanisme de battage muni d'une ouverture de contrôle, un convoyeur incliné transportant le produit à battre, un mécanisme de battage monté transversalement à la direction de progression et formé d'un tambour de battage et d'un contre-batteur équipé d'une garniture de tamis constituée de plusieurs tronçons de garniture de tamis disposés bout à bout, transversalement à la direction de déplacement du produit, **caractérisée en ce que** la garniture de tamis présente un segment de tamis (15) qui augmente l'enroulement du tambour de battage (6) par la garniture de tamis, recouvre la largeur des tronçons de tamis mis bout à bout et est lié de manière séparable à la pluralité de tronçons de garniture de tamis (12, 13, 14).

2. Moissonneuse-batteuse comprenant un carter de mécanisme de battage muni d'une ouverture de contrôle, un convoyeur incliné transportant le produit à battre, un mécanisme de battage monté transversalement à la direction de progression et formé d'un tambour de battage et d'un contre-batteur équipé d'une garniture de tamis constituée de plusieurs tronçons de garniture de tamis disposés bout à bout, transversalement à la direction de déplacement du produit, **caractérisée en ce que** chacun des tronçons de garniture de tamis (12, 13, 14) est prolongé par une liaison articulée avec un segment de tamis (15a, b, c) de même largeur.

3. Moissonneuse-batteuse selon la revendication 2, **caractérisée en ce que** le segment de tamis (15) est formé d'un nombre de segments élémentaires (15a, 15b, 15c) qui correspond au nombre de tronçons de garniture de tamis (12, 13, 14), et **en ce que** les segments élémentaires (15a, 15b, 15c) sont liés de façon mobile en rotation mais stationnaire, de préférence par des charnières (16), aux tronçons de garniture de tamis (12, 13, 14).

4. Moissonneuse-batteuse selon les revendications 2 et 3, **caractérisée en ce que** les bords transversaux associés des tronçons de garniture de tamis (12, 13, 14) et du segment de tamis (15; 15a, b, c) sont liés entre eux par complémentarité de formes, mais de façon séparable.

5. Moissonneuse-batteuse selon les revendications 2 à 4, **caractérisée en ce qu'**un bord transversal est conformé en U et l'autre bord transversal est conformé en équerre et peut s'engager dans le bord en forme de U.

6. Moissonneuse-batteuse selon les revendications 2 à 5, **caractérisée en ce que** les bords des tronçons de garniture de tamis (12, 13, 14) sont conformés en U et les bords associés des segments de tamis (15a, b, c) sont conformés en équerres.

7. Moissonneuse-batteuse selon une ou plusieurs des revendications précédentes 1 à 6, **caractérisée en ce que**, vu dans la direction de déplacement du produit à battre, le ou les segment(s) de tamis (15/15a, b, c) est/sont disposé(s) directement après les tronçons de garniture de tamis (12, 13, 14).
